# FASCICULE DE BREVET EUROPEEN

(11) **EP 2 887 527 B1**
(45) Date de publication et mention de la délivrance du brevet: **07.09.2016**
(21) Numéro de dépôt: 14199947.4
(22) Date de dépôt: 23.12.2014
(51) Int. Cl.: H02M 7/219, B60L 11/18, H02J 1/10

(54) **Bloc d'alimentation électrique compact et modulaire, multi-convertisseurs, notamment pour bornes de recharge rapide de véhicules électriques**
Kompakter, modularer Stromversorgungsblock, Multi-Wandler, insbesondere für Klemmen zum schnellen Aufladen von Elektrofahrzeugen
Compact and modular electric power supply with multiple converters, in particular for quick charging terminals for electric vehicles

(30) Priorité: 23.12.2013 FR 1363399
(43) Date de publication de la demande: 24.06.2015
(73) Titulaire: Evtronic, 33600 Pessac (FR)
(72) Inventeur: Stempin, Eric, 33600 PESSAC (FR); Duponcheel, Romain, 33650 SAINT MORILLON (FR)
(74) Mandataire: Ipside

(56) Documents cités:
- FR-A1- 2 990 310

## Description

### DOMAINE DE L'INVENTION

L'invention se rapporte au domaine général des systèmes de conversion et de stockage d'énergie électrique. Elle concerne plus particulièrement les bornes de rechargement rapide de batteries de véhicules électriques ou plus généralement les équipements réalisant la charge rapide de batteries de forte puissance à partir notamment du courant alternatif secteur.

### CONTEXTE DE L'INVENTION - ART ANTERIEUR

Dans le domaine de la charge de batteries de forte puissance à partir du courant secteur, des batteries telles que celles qui équipent les véhicules électriques par exemple, une attention particulière est généralement portée à la puissance électrique qui est demandée au réseau secteur. C'est en particulier le cas pour les équipements intégrés dans des bornes de recharge de véhicules électriques disposées dans des lieux publiques, pour lesquelles, du fait de leur implantation, le réseau secteur normalement disponible est un réseau limité en puissance.

Du fait de cette limitation, il est nécessaire de mettre en place des moyens permettant d'obtenir le meilleur rendement possible concernant l'utilisation de la puissance électrique fournie par le courant secteur.

Par ailleurs, du fait de cette limitation, il est parfois impossible d'effectuer une charge rapide des batteries d'un véhicule électrique à partir du seul courant secteur pendant toute la durée de la charge. C'est pourquoi, les bornes de chargement rapide peuvent incorporer des dispositifs annexes de fourniture d'énergie électrique qui viennent durant certaines phases de la charge compléter l'apport d'énergie électrique demandée au réseau secteur de façon à limiter la puissance consommée à une valeur inférieure à la puissance maximale disponible du réseau. Ces dispositifs annexes sont par exemple constitués par des batteries tampons, des accumulateurs cinétiques d'énergie, des générateurs photovoltaïques, ou toute autre source d'énergie électrique.

L'utilisation de dispositifs annexes de fourniture d'énergie électrique s'accompagne généralement de la mise en place dans la borne d'équipements complémentaires permettant de réaliser la sommation du courant fourni par les dispositifs annexes et de celui tiré du réseau secteur de façon à alimenter la batterie en cours de charge avec le courant de charge désiré. Par ailleurs, dans le cas où le dispositif annexe de fourniture d'énergie électrique est une batterie tampon ou des sources d'énergie réversibles, la borne de chargement doit comporter les équipements nécessaires au rechargement périodique de la batterie tampon ou des sources d'énergie réversibles.

Par suite l'installation de tous ces équipements dans une borne de chargement, c'est à dire dans une installation de taille relativement réduite, ainsi que la réalisation du câblage d'interconnexion reliant ces équipements entre eux, constituent une opération difficile à réaliser du fait des contraintes d'implantation propres à chaque équipement et des contraintes de logistique qui imposent que certains équipements au moins soient accessibles facilement à la maintenance.

Il existe par conséquent, dans le domaine des bornes de rechargement de véhicules électriques en particulier, un besoin pressant de disposer d'équipements qui soient à la fois performants en matière de rendement, les plus compacts et modulaires possibles et faciles à interconnecter.

Afin de recharger des batteries électriques, notamment dans le contexte de bornes de rechargement rapide de véhicules, on utilise couramment des dispositifs de conversion alternatif-continu ou modules de conversion AC-DC selon la dénomination anglo-saxonne, comportant un redresseur à diode ou à thyristor associé un convertisseur de type Buck.

Un inconvénient de ce type de structure est qu'elle est susceptible de générer des harmoniques sur le réseau électrique sur lequel l'énergie est prélevée, le réseau secteur par exemple.

Un autre inconvénient est constitué par la nécessité de mettre en place une inductance de lissage en sortie de redresseur. Une telle structure connue présente donc un encombrement important.

Un autre inconvénient encore est qu'elle est susceptible de dégrader le facteur de puissance de l'installation en induisant un déphasage sur le courant consommé. Ce déphasage étant notamment induit par l'emploi de redresseurs à diodes ou à thyristor.

Par suite l'utilisation de telles structures implique la mise en place de moyens de filtrages d'harmoniques et de relèvement du facteur de puissance, moyens coûteux et encombrants dont la mise en place pénalise techniquement et économiquement le produit final.

Dans ce même domaine, la demande de brevet français déposée par la société Schneider Electric Industries et publiée sous la référence FR 2990310 divulgue un dispositif de conversion d'énergie électrique destiné au rechargement des batteries d'un véhicule électrique à partir d'un réseau secteur alternatif, mono ou triphasé par exemple, qui comporte un premier module assurant les fonctions de redressement et de filtrage de la tension secteur utilisée et un second module de conversion continu-continu, ou DC-DC selon la dénomination anglo-saxonne, assurant l'adaptation de la tension continue produite par le premier module à la tension des batteries à recharger. Cependant cette demande ne divulgue pas de moyen de fournir un apport d'énergie complémentaire à celle fournie par le réseau secteur pour assurer une charge adéquate des batteries dans certaines phases de la charge durant lesquelles la puissance disponible du réseau s'avère insuffisante.

Par ailleurs la structure même du dispositif revendiqué ne permet pas de réguler de manière dynamique la valeur de la tension en sortie du redresseur, sans procéder à des modifications, ce qui ne permet pas audit dispositif de s'adapter de manière automatique à d'éventuelles fluctuations au cours du temps de la tension réseau ou à d'éventuelles variations, d'un véhicule à l'autre, de la tension des batteries à charger.

En outre une telle structure qui comporte à la fois un module de redressement et de filtrage de la tension réseau ainsi qu'un module de conversion continu-continu présente par nature une absence de modularité qui rend difficile une réalisation sous forme compacte et modulaire.

### PRESENTATION DE L'INVENTION

Un but de l'invention est de proposer une structure modulaire de convertisseur d'énergie électrique permettant de recharger de manière optimale un ou plusieurs groupes (ou packs) de batteries, dites batteries utilisateur, en combinant l'énergie électrique fournie par diverses sources à l'énergie électrique fournie par un réseau secteur alternatif ou réseau AC, de façon à optimiser la consommation électrique sur ledit réseau secteur, notamment en fonction de la puissance maximale disponible du réseau.

A cet effet l'invention a pour objet un dispositif modulaire de conversion d'énergie électrique pour réaliser le rechargement d'une batterie électrique, ou batterie utilisateur, à partir d'un réseau secteur alternatif et de sources annexes d'énergie électrique. Le dispositif selon l'invention, comporte principalement :
- une pluralité de modules commutateurs, de structure sensiblement identique, chaque module commutateur étant associé à une des sources d'énergie électrique disponibles et produisant, par découpage de la tension délivrée par la source à laquelle il est associé une tension continue de valeur donnée;
- un Bus de tension continu, ou Bus DC de puissance, comportant deux lignes électriques, sur lequel chacune des différentes sources d'énergie électrique disponibles est raccordées par l'intermédiaire du module commutateur qui lui est associé, chaque module commutateur étant constitué de deux interrupteurs électroniques montés en série entre les deux lignes du Bus DC de puissance,
- un circuit de commande qui génère les commandes de découpage appliquées sur les interrupteurs des différents modules commutateurs, la commande de découpage appliquée à un module commutateur donné étant définie par une loi de commande qui dépend de la tension et du courant de charge nécessaires pour réaliser un rechargement de la batterie électrique considérée et de la puissance maximale disponible du réseau secteur alternatif;
- une structure d'accueil configurée pour recevoir les différents modules commutateurs et constituer le Bus DC de puissance, ladite structure d'accueil comportant une pluralité d'emplacements fonctionnellement identiques sur lesquels les différents modules commutateurs peuvent être placés et raccordés au Bus DC de puissance.

Selon une caractéristique technique du dispositif, les commandes de découpage générées par le circuit de commande sont des signaux carrés présentant un rapport cyclique qui varie en fonction de la valeur de la tension (52) à établir au niveau du Bus DC de puissance.

Selon un mode de réalisation particulier dans lequel le réseau secteur alternatif est un réseau triphasé, le dispositif selon l'invention comporte trois modules commutateurs réalisant chacun le redressement de la tension alternative délivrée par une des phases; le point milieu de chacun des trois modules commutateurs étant relié à une phase du réseau alternatif par l'intermédiaire d'un transformateur.

Selon une caractéristique technique, le dispositif comporte un module commutateur configuré pour réaliser le raccordement au Bus DC de puissance d'une batterie de stockage d'énergie électrique de tension donnée, le raccordement étant réalisé de telle façon que la batterie de stockage puisse être chargée par le Bus DC de puissance ou bien déchargée dans ce dernier.

Selon une autre caractéristique technique, le dispositif comporte un module commutateur configuré pour réaliser le raccordement d'une batterie utilisateur de tension donnée au Bus DC de puissance, de telle façon que ladite batterie utilisateur puisse être chargée par le Bus DC de puissance avec une tension et un courant de charge donnés caractéristiques de la batterie utilisée.

Selon une autre caractéristique technique ce module commutateur est en outre configuré de telle façon que ladite batterie utilisateur puisse être déchargée sur le Bus DC de puissance de façon à fournir une énergie électrique d'appoint sur ce Bus.

Selon une autre caractéristique technique, le dispositif comporte une structure d'accueil qui héberge un ensemble de modules de commutation, de structures identiques. Ces modules sont, montés sur la structure d'accueil de façon à former au moins trois étages de conversion d'énergie électrique:
- un étage Convertisseur AC-DC réversible comportant trois commutateurs reliés au réseau secteur alternatif par l'intermédiaire d'un transformateur d'isolement,
- un premier étage de conversion DC-DC bidirectionnel configuré pour réaliser le rechargement d'une batterie électrique de stockage;
- un second étage de conversion DC-DC bidirectionnel configuré pour réaliser le rechargement de la batterie utilisateur à recharger.

Le premier étage de conversion DC-DC est en outre configuré de façon à pouvoir injecter du courant prélevé dans la batterie de stockage sur le Bus DC de puissance

Selon une autre caractéristique technique du dispositif, le circuit de commande réalise la régulation du courant de charge ou de décharge de la batterie de stockage, la régulation du courant de charge de la batterie utilisateur ainsi que la régulation de la puissance consommée sur le réseau secteur alternatif. Cette régulation est réalisée en mesurant les courants de charge de la batterie de stockage et de la batterie utilisateur ainsi que le courant consommé sur le réseau secteur alternatif et en appliquant sur chacun des modules de conversion AC-DC ou DC-DC un signal de découpe dont le rapport cyclique varie en fonction de la mesure de courant réalisée pour le module considéré.

Selon une autre caractéristique technique du dispositif, le signal de découpe appliquée par le circuit de commande à chacun des modules est fonction de valeurs de consignes relatives à la tension et au courant de charge de la batterie utilisateur, à la valeur de la tension du Bus DC de puissance et à la puissance maximale disponible du réseau secteur.

Selon une autre caractéristique technique du dispositif, la structure d'accueil comporte un support sur lequel sont montés les boitiers renfermant les différents modules commutateurs formant le dispositif, le support formant lui-même un élément dissipateur thermique, ainsi qu'un dispositif conducteur formant le Bus DC de puissance, qui relie en parallèle les différents modules commutateurs montés sur la structure d'accueil, chacune des liaisons du Bus DC de puissance étant reliée à chacun de modules commutateurs par un moyen de connexion approprié.

Selon une autre caractéristique technique du dispositif, les modules commutateurs sont agencés de telle façon que lorsqu'ils sont montés sur la structure d'accueil, leurs points de connexion avec les deux liaisons formant le Bus DC de puissance se trouvent alignés selon deux rangées parallèles. Le Bus DC de puissance est alors constitué de deux plaques conductrices séparées par un isolant chaque plaque présentant des zones de connexion agencées pour se trouver disposées en regard des points de façon à pouvoir être reliées à ces derniers par des moyens de fixation appropriés.

Selon une forme de réalisation particulière du dispositif, le Bus DC de puissance est constitué par deux couches de matériau conducteur placées sur les faces opposées d'une couche plane de matériau isolant électrique et formant une structure en sandwich.

### DESCRIPTION DES FIGURES

Les caractéristiques et avantages de l'invention seront mieux appréciés grâce à la description qui suit, description qui s'appuie sur les figures annexées qui présentent:
- la figure1, un synoptique général illustrant la structure du dispositif de conversion d'énergie électrique selon l'invention;
- la figure 2, une représentation schématique de la structure d'accueil du dispositif selon l'invention;
- la figure 3, une représentation schématique latérale d'un mode de réalisation du Bus DC de puissance implanté sur la structure d'accueil du dispositif selon l'invention;
- la figure 4, une représentation schématique frontale du Bus DC de puissance implanté sur la structure d'accueil du dispositif selon l'invention dans le mode de réalisation de la figure 3;
- la figure 5, un synoptique illustrant le principe de fonctionnement du dispositif selon l'invention.

### DESCRIPTION DETAILLEE

L'objet de ce brevet consiste en une solution compacte de conversion d'énergie électrique permettant de relier un réseau électrique alternatif comportant une phase ou plus et un ou plusieurs éléments de stockage d'énergie électrique, ou encore de production d'énergie électrique, à une batterie électrique qui doit être rechargée, la batterie d'un véhicule à propulsion électrique, encore dénommé VE dans la suite du texte.

Le texte qui suit décrit le principe de l'invention au travers d'un exemple de réalisation présenté ici à titre non limitatif de la portée ou de l'étendue de l'invention.

Le dispositif présenté permet de relier un réseau secteur alternatif triphasé ainsi qu'un élément de fourniture annexe d'énergie électrique à une batterie utilisateur destinée à alimenter en énergie un véhicule électrique, encore appelée batterie VE dans la suite du texte utilisateur. Dans le cas de l'exemple décrit ici, l'élément de fourniture annexe d'énergie électrique est constitué par une batterie de stockage ou batterie tampon.

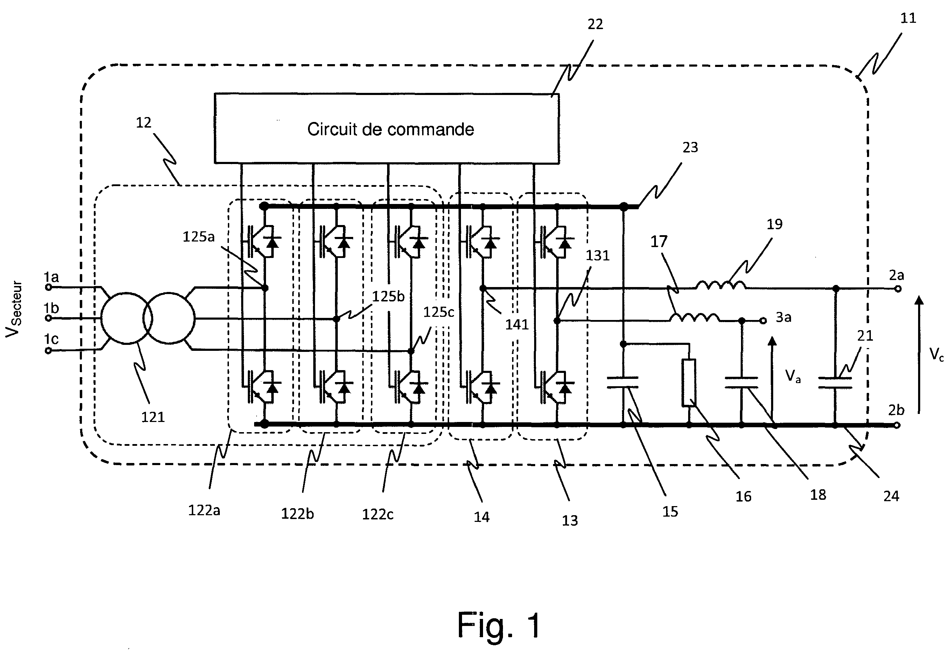

Comme l'illustre la figure 1, le présent dispositif selon l'invention consiste en une structure d'accueil 11 qui héberge un ensemble de convertisseurs d'énergie électrique, de structures identiques, montés sur la structure d'accueil de façon à former au moins trois étages de conversion 12, 13 et 14:
- un étage convertisseur réversible (i.e. AC-DC et DC-AC) 12 à isolation galvanique reliant un réseau électrique alternatif ou réseau AC au dispositif, en 1 a, 1 b et 1 c,
- un étage 13 de conversion DC-DC bidirectionnel, relié en 3a et 2b à un élément de stockage d'énergie électrique (non présenté sur la figure) et
- un étage 14 de conversion DC-DC bidirectionnel, relié en 2a et 2b à la batterie utilisateur à recharger, la batterie VE dans le présent exemple.

Le premier étage 12 de conversion réversible AC-DC est un circuit à découpage qui peut convertir la tension alternative du réseau électrique, la tension secteur, en une tension continue ou inversement. A cet effet, il comporte un transformateur 121 qui réalise une isolation galvanique ainsi que le filtrage du courant alternatif.

Il comporte également des commutateurs électroniques de puissance 122 constitués chacun de deux interrupteurs montés en série, des transistors MOSFET ou IGBT (Insulated Gate Bipolar Transistor) intégrant une diode montée en anti parallèle ou diode de roue libre par exemple.

Selon l'invention, le dispositif compte un interrupteur par phase du réseau alternatif exploité, trois interrupteurs 122a, 122b et 122c par exemple, dans le cas d'un réseau AC triphasé tel que celui illustré par la figure 1.

Le circuit primaire du transformateur 121 est relié aux phases du réseau secteur AC, les enroulements du circuit secondaire étant quant à eux reliés respectivement aux points milieux des commutateurs chargés de réaliser le redressement de la tension alternative fournie par le réseau AC, les points 123a, 123b et 123c dans l'exemple de la figure 1.

Le transformateur 121 est par ailleurs conçu pour supporter la tension secteur d'entrée (de l'ordre de 400V efficace) et pour pouvoir transmettre la puissance maximale disponible du réseau AC, une puissance de l'ordre de 50kW pour le réseau secteur triphasé par exemple. Les interrupteurs 122 sont quant à eux dimensionnés en fonction du courant maximum à débiter dans la batterie utilisateur à recharger, pendant la charge de cette dernière.

Le premier étage 12 est en outre associé à un ou plusieurs condensateurs 15 à haute tension et forte capacité (de l'ordre 220 µF par exemple) connectés entre les bornes positives et négatives des interrupteurs 122, qui sont utilisés pour filtrer la tension alternative redressée. Chaque condensateur 15 est lui-même chargé par un élément résistif 16 placé en parallèle sur ses bornes qui permet de stabiliser et de décharger ce dernier lors de l'arrêt du fonctionnement du dispositif 11.

De par sa structure qui intègre un transformateur d'isolement 121, le module de conversion AC-DC permet avantageusement de se passer d'éléments de filtrage inductifs en entrée et en sortie de module, sans impacter la forme de la tension AC d'entrée, et gagne ainsi en compacité.

De plus, grâce à la présence du transformateur 121, Il permet également de disposer d'un isolement galvanique entre l'entrée et la sortie du module.

Le second étage 13 de conversion DC-DC est également un circuit à découpage qui convertit la tension alternative redressée par le module 12 et stockée dans le condensateur 15 en une tension continue de plus faible valeur correspondant par exemple à la tension de service de la batterie de stockage, ou inversement qui convertit la tension de la batterie de stockage en une tension continue plus élevée correspondant à la tension du Bus de puissance.

A cet effet il comporte également un commutateur électronique constitué de deux interrupteurs électroniques de puissance montés en série, des transistors MOSFET ou IGBT intégrant une diode montée en anti parallèle ou diode de roue libre par exemple.

Le deuxième étage 13 est par ailleurs associé à une inductance 17 de lissage qui relie le point milieu 131 du commutateur au point 3a de raccordement de l'élément de stockage d'énergie électrique et qui est utilisée pour filtrer le courant continu délivré par le module ainsi qu'à un condensateur 18 raccordé entre les points 3a et 2b destiné à filtrer la tension continue en sortie du second étage 13.

L'inductance est ici dimensionnée en fonction de la fréquence de découpage à laquelle les interrupteurs de puissance découpent la tension de bus DC et du courant d'ondulation souhaité. Le condensateur est quant à lui choisi afin de réaliser un filtre passe bas dont la fréquence de coupure est sensiblement plus faible que la fréquence de découpage.

Le troisième étage 14 de conversion DC-DC est également un circuit à découpage qui convertit la tension continue délivrée par les deux premiers étages, en une tension continue de plus faible valeur utilisée pour réaliser la recharge de la batterie utilisateur, la batterie VE dans l'exemple présenté ici ou inversement qui convertit la tension de la batterie utilisateur en une tension continue plus élevée correspondant à la tension du Bus de puissance.

A cet effet il comporte également un commutateur électronique constitué de deux interrupteurs électroniques de puissance montés en série, des transistors MOSFET ou IGBT intégrant une diode montée en anti parallèle ou diode de roue libre par exemple.

Le troisième étage 14 est par ailleurs relié à une inductance de lissage 19 qui relie le point milieu 141 du commutateur au point 2a de raccordement de la batterie utilisateur à charger et qui est utilisée pour filtrer le courant continu, ainsi qu'à un condensateur 21 raccordé entre les points 3a et 2b pour filtrer la tension continue en sortie du troisième étage 14.

Comme pour le deuxième étage 13, l'inductance est ici dimensionnée en fonction de la fréquence à laquelle les interrupteurs de puissance découpent la tension de bus DC et du courant d'ondulation souhaité. Le condensateur est quant à lui choisi afin de réaliser un filtre passe bas dont la fréquence de coupure est sensiblement plus faible que la fréquence de découpage.

Selon l'invention, tous les commutateurs constituant les différents étages du dispositif présentent la même structure bidirectionnelle et sont constitués d'interrupteurs électroniques de mêmes types, de sorte qu'ils sont interchangeables, ce qui permet d'obtenir un système avantageusement modulaire en termes d'éléments constitutifs.

Chaque commutateur est dimensionné en fonction de l'équipement auquel il appartient. Ainsi, par exemple, dans le cas d'une borne de chargement d'une puissance de 50kW destinée au rechargement de batteries de 400V avec un courant de 125A, chaque commutateur est constitué de composant à semi-conducteurs rapides, supportant des hautes tensions, de l'ordre de 1200V, et des courants élevés, de l'ordre de 125A, transistor MOSFET ou IGBT par exemple, composants qui peuvent en outre supporter des fréquences de commutation en ouverture et fermeture de l'ordre de quelques dizaines de kilohertz.

Selon l'invention également, les circuits commutateurs 122a, 122b et 122c du premier étage 12 de conversion AC-DC sont montés directement en sortie du bobinage secondaire du transformateur 121, le lissage du courant d'entrée étant réalisé par le caractère inductif du bobinage constituant le circuit secondaire du transformateur, ainsi que par la fréquence de découpage élevée (quelques dizaines de kilohertz) appliquée à la tension alternative d'entrée.

Ainsi il est avantageusement possible de réaliser le découpage sans introduire d'inductance de lissage, ce qui permet de renforcer le caractère compact du dispositif.

Afin de réaliser un pilotage cohérent des différents étages, le dispositif selon l'invention comporte un circuit de commande 22 dont le rôle principal est de piloter chacun des interrupteurs électroniques de puissance suivant une loi de commande appropriée.

Le circuit de commande 22 est par exemple un circuit électronique qui génère les signaux de commande des interrupteurs électroniques de puissance, des transistors dans le présent exemple, qui fonctionnent en commutation entre un état bloqué et un état passant.

Les deux transistors formant un même commutateur sont commandés de manière complémentaire, un transistor étant en mode bloqué lorsque le transistor auquel il est associé est en mode passant.

Par ailleurs, la variation de la puissance électrique délivrée par chaque étage est contrôlée en faisant varier le rapport cyclique du signal de commande appliqué aux interrupteurs (ratio entre le temps de conduction et le temps de blocage d'un interrupteur). Le signal de commande permet le contrôle du courant sur chaque branche du convertisseur électrique et une mise en parallèle efficace des différentes sources d'énergie électrique utilisées à un instant donné pour recharger efficacement la batterie.

D'un point de vue architectural, le dispositif selon l'invention est organisé de façon à renforcer le caractère fonctionnellement modulaire.

A cet effet, les modules de commutation qui constituent les différents étages, les modules 122a, 122b, 122c, 13 ou 14 dans le présent exemple, présentent une structure matérielle identique qui permet leur assemblage par simple mise en parallèle, de sorte que cet assemblage peut être réalisé sans qu'il soit nécessaire d'imposer un ordre de montage des différents étages.

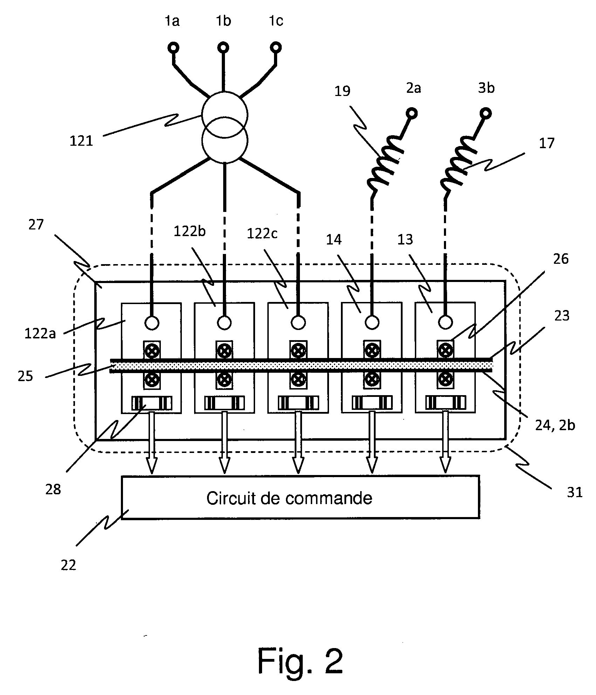

L'architecture du dispositif est par suite organisée autour d'une structure centrale 31, ou structure d'accueil, telle que celle illustrée par les figures 2 à 4 par exemple. Cette structure joue le rôle de structure physique d'accueil sur laquelle les différents modules sont montés mécaniquement et de structure d'interconnexion en forme de Bus de puissance 23-24.

Dans l'exemple de réalisation illustré par les figures 2 à 4, le Bus de puissance proprement dit est constitué par deux couches de matériau conducteur formant respectivement les liaisons 23 et 24 du Bus, tel qu'illustré par la figure 1. Ces couches de matériau conducteur sont séparées l'une de l'autre par une couche de matériau isolant 25 sur laquelle les deux couches de matériau conducteur sont assemblées à la façon d'un sandwich.

Dans une forme de réalisation préférée les deux couches de matériau conducteur formant les liaisons 23 et 24 sont deux plaques métalliques fixées, par collage par exemple, sur chacune des faces d'une plaque 25 de matériau isolant. Alternativement le Bus de puissance peut être constitué par une couche d'un substrat isolant sur les faces de laquelle on dépose chimiquement deux couches de matériau conducteur.

Le bus de puissance ainsi constitué comporte des pattes de fixations 26, configurées et agencées de façon à pouvoir être fixées sur les bornes correspondantes du boitier renfermant un module de conversion électrique, autrement dit un commutateur, 122a, 122b, 122c, 13 ou 14.

Il comporte également, au niveau des plaques conductrices 23 et 24, des aménagements permettant de réaliser le montage direct sur le Bus de puissance, de condensateurs destinés à filtrer la tension alternative redressée produite par le premier étage 12, comme le condensateur 15 décrit précédemment.

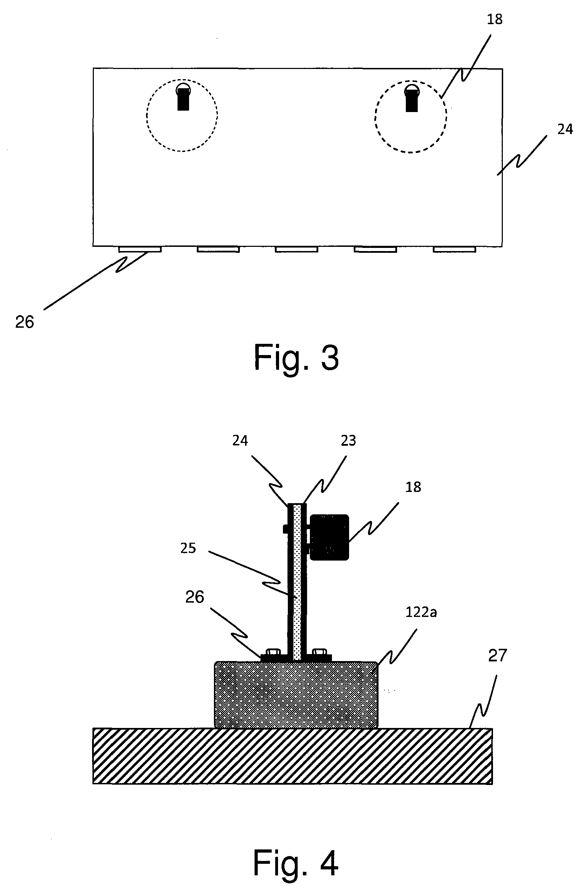

Outre le bus de puissance, la structure d'accueil comporte également, comme l'illustrent les figures 2 et 4, un élément dissipateur massif 27 formant un radiateur sur lequel les boitiers renfermant les différents commutateurs sont fixés de manière appropriée de façon à ce que la chaleur produite par ces derniers soit efficacement dissipée par l'intermédiaire du radiateur 27.

Selon les besoins et la configuration retenue, l'élément dissipateur 27 peut être un radiateur de type convecteur à ailettes ou encore un radiateur à circulation de fluide.

Selon l'invention, chaque module de commutation 122a, 122b, 122c, 13 ou 14 comporte ses propres entrées/sorties permettant de réaliser les raccordements nécessaires avec les différents éléments du dispositif conformément au schéma de la figure 1, à savoir:
- le raccordement des entrées commutateurs 122a, 122b et 122c formant l'étage 12 de conversion AC-DC au transformateur d'isolement 121 du réseau alternatif, ou le raccordement des sorties des modules de commutation 13 et 14 formant les étages 13 et 14 de conversion DC-DC aux inductances de filtrage 17 et 19 des courants de sortie;
- le raccordement de chaque module aux liaisons 23 et 24 du Bus de puissance;
- le raccordement de chaque module au circuit de commande 22 via une interface appropriée (non représenté sur les figures).

De la sorte, un module de conversion d'énergie peut avantageusement être mis en place ou supprimé sans que cela ne modifie l'agencement ou l'interconnexion des modules déjà montés sur la structure d'accueil 31.

De la sorte également, chaque module de commutation peut en outre être avantageusement positionné sur un emplacement quelconque de la structure d'accueil 31, la position occupée par un commutateur donné ne dépendant pas de sa fonction dans le dispositif.

Il est ainsi possible de placer chacun des différents modules de commutation 122a, 122b, 122c, 13 ou 14, de manière indépendante de son fonctionnement, de façon, par exemple, à optimiser la répartition des échauffements thermiques sur le dissipateur 27.

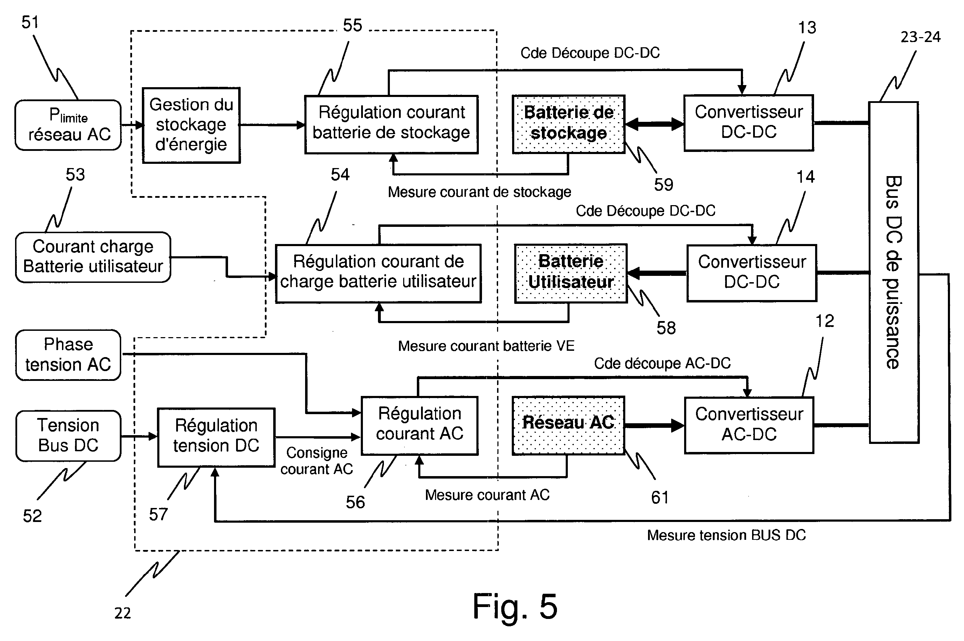

D'un point de vue fonctionnel le dispositif selon l'invention réalise et implémente les fonctions présentées sur l'illustration de la figure 5. Par suite son fonctionnement peut être décrit par les différents modes suivants, modes qui peuvent être enchainés automatiquement par le circuit de commande 22 chargé de gérer le fonctionnement de l'équipement considéré, la borne de rechargement ici, ou mis en oeuvre sur demande de l'opérateur:
- un mode de fonctionnement initial;
- un mode de fonctionnement de démarrage;
- un mode de fonctionnement nominale;
- un mode de fonctionnement à forte consommation;
- un mode de fonctionnement de récupération.

Dans le mode de fonctionnement initial, ou mode "stand-by", aucun interrupteur n'est commandé par le circuit de commande 22 de sorte que, les interrupteurs des différents modules DC-DC étant à l'état bloqué, la tension du réseau AC est simplement redressée et transmise par le Bus DC de puissance aux condensateurs 15 qui sont alimentés par le bus.

Dans le mode de fonctionnement de démarrage, on procède à la mise en marche de l'équipement, de la borne de rechargement dans le présent exemple, en vue de procéder au rechargement d'une batterie utilisateur.

Les interrupteurs formant les commutateurs 122a à 122c du module 122 de conversion AC-DC sont pilotés par le circuit de commande 22 suivant une loi de commande donnée, de manière à charger le condensateur de bus 15 à une valeur constante et supérieure à la tension des batteries à recharger. Le dispositif est alors en état de charger la batterie utilisateur.

La loi de commande prend notamment en compte des consignes d'entrée telles que, notamment, la puissance maximale 51 pouvant être prélevée sur le réseau AC et la tension 52 à établir sur le Bus DC de puissance 23-24.

Le mode de fonctionnement nominale correspond à un mode de fonctionnement pour lequel la charge de la batterie utilisateur ne nécessite par d'apport d'énergie complémentaire à celle fournie par le réseau secteur.

Ainsi dans le présent exemple de mise en oeuvre (charge d'une batterie directement en courant continu), le circuit de commande 22 pilote alors les interrupteurs du module 14 de conversion DC-DC du dispositif, suivant une loi de commande déterminée, de manière à établir un courant de valeur donnée dans la batterie utilisateur en cours de charge. Cette valeur de courant est généralement transmise au circuit de commande par une consigne externe 53 définie à partir d'un profil de charge propre à la technologie de la batterie considérée, un courant de l'ordre de 125 Ampères par exemple.

Comme l'illustre la figure 5, le circuit de commande 22 réalise une régulation 54 du courant de charge de la batterie utilisateur, en contrôlant à tout instant la valeur de ce courant de charge et en agissant sur la valeur du rapport cyclique du signal de commande des interrupteurs du module 14 de conversion DC-DC de façon à maintenir la valeur de consigne.

Dans ce mode de fonctionnement, le circuit de commande 22, dans la mesure où la puissance disponible du réseau AC le permet, pilote également les interrupteurs du module 13 de conversion DC-DC du dispositif, suivant une loi de commande déterminée, de manière à assurer la charge de la batterie de stockage avec une régulation 55 du courant de charge de la batterie de stockage à la valeur appropriée.

La charge de la batterie de stockage est opérée selon un principe identique à celui suivi pour la charge de la batterie utilisateur, la valeur du courant de charge étant toutefois non pas une consigne mais un paramètre interne qui dépend de la puissance disponible du réseau AC et de la batterie de stockage associée au dispositif selon l'invention dans la borne de rechargement considérée.

La puissance consommée sur le réseau AC est par ailleurs contrôlée par le circuit de commande 22 qui réalise la régulation 56, 57 du courant AC consommé en mesurant la tension et le courant du réseau AC et en agissant sur la valeur du rapport cyclique du signal de commande des interrupteurs du module 12 de conversion AC-DC.

Le mode de fonctionnement à forte consommation correspond à un mode de fonctionnement pour lequel, pour certaines phases de la charge de la batterie utilisateur, la puissance que l'on peut tirer du réseau AC ne permet pas d'obtenir le courant de charge voulu.

Lors d'un fonctionnement à forte consommation, la compensation d'énergie est alors activée. Les deux interrupteurs du module 13 de conversion DC-DC associé à la batterie de stockage sont pilotés suivant une loi de commande donnée, de manière à établir un courant complémentaire.

Ce courant complémentaire peut être un courant continu qui vient s'ajouter au courant produit par le module 12 de conversion AC-DC à partir du réseau alternatif, dans le cas où la batterie utilisateur est rechargée directement en courant continu, comme dans l'exemple décrit précédemment.

Alternativement ce peut être un courant alternatif produit par le module 12 de conversion AC-DC à partir de l'énergie stockée dans la batterie tampon, courant qui vient s'ajouter au courant alternatif fourni par le réseau secteur, dans le cas où la batterie utilisateur est rechargée depuis une source alternative par un dispositif redresseur annexe, logé dans le véhicule par exemple.

L'activation de ce mode de fonctionnement est induite, lors de la charge de la batterie utilisateur par les mesures du courant AC délivré par le secteur, mesures effectuées par le module de commande 22. Ces mesures sont comparées au niveau maximum de puissance disponible sur le réseau AC, niveau maximum représenté par la consigne 51 transmise au circuit de commande 22.

Par suite si le courant consommé sur le réseau AC atteint une valeur maximale, ce mode de fonctionnement est activé et le module de conversion 13 est commandé de façon à produire un courant d'appoint à partir de l'énergie disponible dans la batterie de stockage.

Le mode de fonctionnement de récupération correspond à un mode pour lequel le circuit de commande 22 effectue seulement le rechargement de la batterie de stockage en actionnant les interrupteurs constituant le module 14 de conversion DC-DC associé à cette dernière, selon un principe analogue à celui suivi pour le mode de fonctionnement nominal.

La loi de commande du module de conversion AC-DC consiste donc, compte tenu des divers modes de fonctionnement décrits précédemment, à maintenir à une valeur constante de consigne la tension continue du condensateur de filtrage 15 en jouant sur la modulation de la puissance absorbée sur le réseau AC, de sorte que, si la tension sur le Bus DC de puissance diminue, alors on augmente la puissance absorbée sur le réseau électrique AC; et que si la tension sur le Bus DC de puissance augmente alors on diminue la puissance absorbée sur le réseau électrique AC.

La puissance absorbée par le module 12 de conversion AC-DC est ainsi modulée dynamiquement en mesurant le courant prélevé sur le réseau électrique AC et en appliquant un signal de commande ayant le rapport cyclique approprié sur les interrupteurs constituant les module de commutation 122a à 122c du module de conversion 12.

Dans tous les cas de fonctionnement, le circuit de commande 22 s'assure que la puissance consommée sur le réseau AC est inférieure à la valeur de consigne 51 imposée et, dans le cas où cette puissance est insuffisante pour assurer une charge convenable de la batterie utilisateur (Charge DC ou charge AC), tente de suppléer l'insuffisance en mettant à contribution les sources complémentaires d'énergie électrique dont il dispose, en utilisant l'énergie contenue dans la batterie de stockage par exemple.

Selon l'invention les différents modes de fonctionnement peuvent être mis en oeuvre suivant différentes combinaisons qui correspondent à l'opération exécutée.

Ainsi dans le cas d'une opération de rechargement d'une batterie utilisateur, le circuit de commande exécute successivement une phase de fonctionnement en mode de démarrage et une phase en mode nominal en intercalant entre ces deux phases, si nécessaire, une phase de fonctionnement en mode de forte consommation.

De même après l'exécution d'une opération de rechargement, le circuit de commande peut exécuter une phase de fonctionnement en mode récupération ou passer directement en mode "stand-by".

Il est à noter qu'outre les avantages techniques qui ressortent de la description précédente, le contrôle du courant du réseau électrique alternatif par le circuit de commande 22 permet avantageusement d'effectuer, sans aucun ajout de matériel spécifique, une correction du facteur de puissance en maintenant en phase le courant et la tension du réseau électrique alternatif.

Il est à noter également que, de par sa topologie, la structure de conversion du module 12 de conversion AC-DC est une structure bidirectionnelle. Il est donc possible d'utiliser ce module pour transférer de l'énergie des éléments de stockage de courant continu vers le circuit alternatif.

Cette caractéristique technique intrinsèque permet par exemple de réaliser, sans aucun ajout de matériel, une compensation d'énergie lors d'une charge de véhicule en courant alternatif triphasé.

Il est à noter encore que du fait de sa structure modulaire, le dispositif selon l'invention peut accueillir plusieurs sources d'énergie électrique permettant de suppléer si nécessaire ou même de remplacer temporairement le réseau secteur AC qui constitue généralement la source principale d'énergie électrique. Le dispositif selon l'invention peut ainsi accueillir, outre une batterie de stockage, diverses sources de production d'énergie électrique telles que des générateurs photovoltaïques ou des éoliennes.

L'intégration de ces autres sources au système général est réalisée au moyen de modules de conversion complémentaires dédiés à ces sources, montés sur la structure d'accueil 31. La structure d'accueil est alors dimensionnée pour présenter un nombre suffisant de points de connexion au Bus DC de puissance 23-24.

## Revendications

1. Dispositif modulaire (11) de conversion d'énergie électrique pour réaliser le rechargement d'une batterie électrique (58), ou batterie utilisateur, à partir d'un réseau secteur alternatif (61) et de sources annexes d'énergie électrique (59), lesdites sources annexes d'énergie électrique (59) étant par exemple constituées par des batteries tampon, par des accumulateurs cinétiques d'énergie, par des générateurs photovoltaïques ou par toute autre source d'énergie électrique, **caractérisé en ce qu'**il comporte:
- une pluralité de modules commutateurs (122a, 122b, 122c, 13, 14), de structure sensiblement identique chaque module commutateur étant associé à une des sources d'énergie électrique disponibles (61, 59) et produisant, par découpage de la tension délivrée par la source à laquelle il est associé une tension continue de valeur donnée;
- un Bus DC de puissance comportant deux lignes électriques (23, 24), sur lequel chacune des différentes sources d'énergie électrique disponibles est raccordée par l'intermédiaire du module commutateur qui lui est associé, chaque module commutateur étant constitué de deux interrupteurs électroniques montés en série entre les deux lignes (23, 24) du Bus DC de puissance,
- un circuit de commande (22) qui génère les commandes de découpage appliquées sur les interrupteurs des différents modules commutateurs (122a, 122b, 122c, 13, 14), la commande de découpage appliquée à un module commutateur donné étant définie par une loi de commande qui dépend de la tension et du courant (53) de charge nécessaires pour réaliser un rechargement de la batterie électrique considérée (58) et de la puissance maximale (51) disponible sur le réseau secteur alternatif (61);
- une structure d'accueil (31) configurée pour recevoir les différents modules commutateurs et constituer le Bus DC de puissance, ladite structure d'accueil comportant une pluralité d'emplacements fonctionnellement identiques sur lesquels les différents modules commutateurs peuvent être placés ;
et **en ce que** les commandes de découpage générées par le circuit de commande sont des signaux carrés présentant un rapport cyclique qui varie en fonction de la valeur de la tension (52) à établir au niveau du Bus DC de puissance.

2. Dispositif selon la revendication 1, **caractérisé en ce que**, ledit réseau secteur alternatif (61) étant un réseau triphasé, il comporte trois modules commutateurs (122a, 122b, 122c) réalisant chacun le redressement de la tension alternative délivrée par une des phases en tension continue; le point milieu de chacun des trois modules commutateurs étant relié à une phase du réseau alternatif (61) par l'intermédiaire d'un transformateur (121).

3. Dispositif selon l'une des revendications 1 à 2, **caractérisé en ce qu'**il comporte un module commutateur (13) configuré pour réaliser le raccordement d'une batterie de stockage d'énergie électrique (59), de tension donnée, au Bus DC de puissance, de telle façon que la batterie de stockage (59) puisse être chargée par le Bus DC de puissance ou bien déchargée dans ce dernier.

4. Dispositif selon l'une des revendications 1 à 3, **caractérisé en ce qu'**il comporte un module commutateur (14) configuré pour réaliser le raccordement d'une batterie utilisateur (58), de tension donnée, au Bus DC de puissance, de telle façon que ladite batterie utilisateur (58) puisse être chargée par le Bus DC de puissance avec une tension et un courant de charge donnés, caractéristiques de la batterie utilisée.

5. Dispositif selon la revendication 4, **caractérisé en ce que** le module commutateur (14) est en outre configuré de telle façon que ladite batterie utilisateur (58) puisse être déchargée sur le Bus DC de puissance de façon à fournir une énergie électrique d'appoint sur ce Bus.

6. Dispositif selon l'une quelconque des revendications précédentes, **caractérisé en ce qu'**il comporte une structure d'accueil (11) qui héberge un ensemble de modules de commutation, de structures identiques, montés sur la structure d'accueil (31) de façon à former au moins trois étages de conversion d'énergie électrique (12, 13 et 14) :
- un étage convertisseur AC-DC (12) réversible comportant trois commutateurs (122a, 122b, 122c) reliés respectivement à chacune des phases du réseau secteur alternatif par l'intermédiaire d'un transformateur d'isolement (121),
- un premier étage de conversion DC-DC (13) bidirectionnel, configuré pour réaliser le rechargement d'une batterie électrique de stockage (59);
- un second étage de conversion DC-DC (14) bidirectionnel, configuré pour réaliser le rechargement de la batterie utilisateur (58) à recharger;
le premier étage (13) de conversion DC-DC étant en outre configuré de façon à pouvoir injecter du courant prélevé dans la batterie de stockage (59) sur le Bus DC de puissance

7. Dispositif selon l'une quelconque des revendications précédentes, **caractérisé en ce que** le circuit de commande (22) réalise la régulation (55) du courant de charge ou de décharge de la batterie de stockage (59), la régulation (54) du courant de charge de la batterie utilisateur (58) ainsi que la régulation (56, 57) de la puissance consommée sur le réseau secteur alternatif (61), cette régulation étant réalisée en mesurant les courants de charge de la batterie de stockage (59) et de la batterie utilisateur (58) ainsi que le courant consommé sur le réseau secteur alternatif (61) et en appliquant sur chacun des modules de conversion AC-DC ou DC-DC (122, 13, 14) un signal de découpe dont le rapport cyclique varie en fonction de la mesure de courant réalisée pour le module considéré.

8. Dispositif selon la revendication 6 **caractérisé en ce que** le signal de découpe appliquée à chacun des modules (122a, 122b, 122c, 13, 14) est fonction de valeurs de consigne relatives à la tension et au courant de charge de la batterie utilisateur (58), à la valeur (52) de la tension du Bus DC de puissance (23, 24) et à la puissance maximale disponible (51) du réseau secteur.

9. Dispositif selon l'une quelconque des revendications précédentes, **caractérisé en ce que** la structure d'accueil (31) comporte un support (27) sur lequel sont montés les boitiers renfermant les différents modules commutateurs formant le dispositif, le support (27) formant un élément dissipateur thermique, ainsi qu'un dispositif conducteur formant le Bus DC de puissance, qui relie en parallèle les différents modules commutateurs montés sur la structure d'accueil (31), chacune des liaisons (23, 24) du Bus DC de puissance étant reliée à chacun de modules commutateurs par un moyen de connexion approprié.

10. Dispositif selon la revendication 9, **caractérisé en ce que**, les modules commutateurs étant agencés de telle façon que lorsqu'ils sont montés sur la structure d'accueil (31), leurs points de connexion avec les deux liaisons (23, 24) formant le Bus DC de puissance se trouvent alignés selon deux rangées parallèles, le Bus DC de puissance est constitué de deux plaques conductrices (23, 24) séparées par un isolant (25) chaque plaque présentant des zones de connexion agencées pour se trouver disposées en regard des points de façon à pouvoir être reliées à ces derniers par des moyens de fixation appropriés.

11. Dispositif selon la revendication 10, **caractérisé en ce que** le Bus DC de puissance est constitué par deux couches de matériau conducteur (23, 24) placées sur les faces opposées d'une couche plane de matériau isolant électrique (25) et formant une structure en sandwich.

## Patentansprüche

1. Modulare Vorrichtung (11) zur Umwandlung von elektrischer Energie, um das Wiederaufladen einer elektrischen Batterie (58), oder einer Verbraucherbatterie, aus einem alternativen Sektornetz (61) und zusätzlichen elektrischen Energiequellen (59) durchzuführen, wobei die zusätzlichen elektrischen Energiequellen (59) beispielsweise aus Pufferbatterien, aus kinetischen Energieakkumulatoren, aus Photovoltaikgeneratoren oder aus einer beliebigen anderen elektrischen Energiequelle bestehen, **dadurch gekennzeichnet, dass** diese umfasst:
- mehrere Schaltermodule (122a, 122b, 122c, 13, 14) mit einer im Wesentlichen identischen Struktur, wobei jedes Schaltermodul einer von verfügbaren elektrischen Energiequellen (61, 59) zugeordnet ist und, durch Trennen der Spannung, die von der Quelle geliefert wird, der dieses zugeordnet ist, eine kontinuierliche Spannung mit einem gegebenen Wert erzeugt;
- einen DC-Leistungsbus, der zwei elektrische Leitungen (23, 24) umfasst, auf dem jede der verschiedenen verfügbaren elektrischen Energiequellen mit Hilfe des Schaltermoduls, das dieser zugeordnet ist, verbunden ist, wobei jedes Schaltermodul aus zwei elektronischen Unterbrechern besteht, die in Serie zwischen den beiden Leitungen (23, 24) des DC-Leistungsbusses montiert sind;
- eine Steuerschaltung (22), welche Trennsteuerungen generiert, die an die Unterbrecher der verschiedenen Schaltermodule (122a, 122b, 122c, 13, 14) angelegt werden, wobei die an ein gegebenes Schaltermodul angelegte Trennsteuerung durch ein Regelgesetz definiert ist, das von der Spannung und dem Ladestrom (53) abhängig ist, die notwendig sind, um ein Wiederaufladen der betreffenden elektrischen Batterie (58) und der maximalen Leistung (51) durchzuführen, die in dem alternativen Sektornetz (61) verfügbar ist;
- eine Aufnahmestruktur (31), die ausgelegt ist, die verschiedenen Schaltermodule aufzunehmen und den DC-Leistungsbus zu bilden, wobei die Aufnahmestruktur mehrere funktionell identische Plätze umfasst, auf welche die verschiedenen Schaltermodule platziert werden können;
und dass die von der Steuerschaltung generierten Trennsteuerungen Rechtecksignale sind, die ein Tastverhältnis aufweisen, das entsprechend dem Wert der Spannung (52) variiert, der auf der Ebene des DC-Leistungsbusses festzulegen ist.

2. Vorrichtung nach Anspruch 1, **dadurch gekennzeichnet, dass**, da das alternative Sektornetz (61) ein Dreiphasennetz ist, dieses drei Schaltermodule (122a, 122b, 122c) umfasst, welche jeweils ein Gleichrichten der alternativen Spannung ermöglichen, die von einer der Phasen mit kontinuierlicher Spannung geliefert wird, wobei der Mittelpunkt jedes der drei Schaltermodule mit einer Phase des alternativen Netzes (61) mit Hilfe eines Transformators (121) verbunden ist.

3. Vorrichtung nach einem der Ansprüche 1 bis 2, **dadurch gekennzeichnet, dass** diese ein Schaltermodul (13) umfasst, das ausgelegt ist, die Verbindung einer Batterie (59) zum Speichern elektrischer Energie, mit einer gegebenen Spannung, mit dem DC-Leistungsbus derart herzustellen, dass die Speicherbatterie (59) von dem DC-Leistungsbus aufgeladen oder auch in diesem Letzteren entladen werden kann.

4. Vorrichtung nach einem der Ansprüche 1 bis 3, **dadurch gekennzeichnet, dass** diese ein Schaltermodul (14) umfasst, das ausgelegt ist, die Verbindung einer Verbraucherbatterie (58), mit einer gegebenen Spannung, mit dem DC-Leistungsbus derart herzustellen, dass die Verbraucherbatterie (58) von dem DC-Leistungsbus mit einer Spannung und einem Ladestrom, die gegeben und für die verwendete Batterie charakteristisch sind, aufgeladen werden kann.

5. Vorrichtung nach Anspruch 4, **dadurch gekennzeichnet, dass** das Schaltermodul (14) außerdem derart ausgelegt ist, dass die Verbraucherbatterie (58) auf dem DC-Leistungsbus entladen werden kann, um auf diesem Bus eine zusätzliche elektrische Energie zu liefern.

6. Vorrichtung nach einem der vorhergehenden Ansprüche, **dadurch gekennzeichnet, dass** diese eine Aufnahmestruktur (11) umfasst, welche eine Einheit von Schaltermodulen mit identischen Strukturen unterbringt, die an der Aufnahmestruktur (31) montiert sind, um mindestens drei Stufen zur Umwandlung elektrischer Energie (12, 13 und 14) zu bilden:
- eine reversible Wandlerstufe WS-GS (12), welche drei Schalter (122a, 122b, 122c) umfasst, die jeweils mit jeder der Phasen des alternativen Sektornetzes mit Hilfe eines Isoliertransformators (121) verbunden sind,
- eine erste bidirektionale Wandlerstufe GS-GS (13), die ausgelegt ist, das Wiederaufladen einer elektrischen Speicherbatterie (59) durchzuführen,
- eine zweite bidirektionale Wandlerstufe GS-GS (14), die ausgelegt ist, das Wiederaufladen der wiederaufzuladenden Verbraucherbatterie (58) durchzuführen,
wobei die erste Wandlerstufe GS-GS (13)außerdem ausgelegt ist, der Speicherbatterie (59) entnommenen Strom in den DC-Leistungsbus einspeisen zu können.

7. Vorrichtung nach einem der vorhergehenden Ansprüche, **dadurch gekennzeichnet, dass** die Steuerschaltung (22) die Regelung (55) des Lade- oder Entladestroms der Speicherbatterie (59), die Regelung (54) des Ladestroms der Verbraucherbatterie (58) sowie die Regelung (56, 57) der auf dem alternativen Sektornetz (61) verbrauchten Leistung durchführt, wobei diese Regelung durch die Messung der Ladeströme der Speicherbatterie (59) und der Verbraucherbatterie (58) sowie des auf dem alternativen Sektornetz (61) verbrauchten Stroms durchgeführt wird, und indem an jedes der Wandlermodule WS-GS oder GS-GS (122, 13, 14) ein Trennsignal angelegt wird, dessen Tastverhältnis entsprechend der Messung des Stroms variiert, die für das betreffende Modul durchgeführt wird.

8. Vorrichtung nach Anspruch 6, **dadurch gekennzeichnet, dass** das Trennsignal, das an jedes der Module (122a, 122b, 122c, 13, 14) angelegt wird, Vorgabewerten in Bezug auf die Spannung und den Ladestrom der Verbraucherbatterie (58), auf den Wert (52) der Spannung des DC-Leistungsbusses (23, 24) und auf die maximale verfügbare Leistung (51) des Sektornetzes entspricht.

9. Vorrichtung nach einem der vorhergehenden Ansprüche, **dadurch gekennzeichnet, dass** die Aufnahmestruktur (31) einen Träger (27) umfasst, an dem Gehäuse montiert sind, welche die verschiedenen Schaltermodule umschließen, die die Vorrichtung bilden, wobei der Träger (27) ein Wärmeverteilungselement bildet, und eine leitende Vorrichtung, die den DC-Leistungsbus bildet, der die verschiedenen Schaltermodule, die an der Aufnahmestruktur (31) montiert sind, parallel verbindet, wobei jede der Verbindungen (23, 24) des DC-Leistungsbusses mit jedem der Schaltermodule durch ein geeignetes Verbindungsmittel verbunden ist.

10. Vorrichtung nach Anspruch 9, **dadurch gekennzeichnet, dass** die Schaltermodule derart ausgelegt sind, dass, wenn sie an der Aufnahmestruktur (31) montiert werden, ihre Verbindungspunkte mit den beiden Verbindungen (23, 24), die den DC-Leistungsbus bilden, gemäß zwei parallelen Reihen ausgerichtet sind, wobei der DC-Leistungsbus aus zwei leitenden Platten (23, 24) besteht, die durch ein Isoliermittel (25) getrennt sind, wobei jede Platte Verbindungszonen aufweist, die ausgelegt sind, in Bezug auf die Punkte angeordnet zu sein, um mit diesen Letzteren durch geeignete Befestigungsmittel verbunden werden zu können.

11. Vorrichtung nach Anspruch 10, **dadurch gekennzeichnet, dass** der DC-Leistungsbus aus zwei Schichten eines leitenden Materials (23, 24) besteht, die auf den gegenüberliegenden Flächen einer ebenen Schicht aus elektrischem Isoliermaterial (25) platziert sind und eine Sandwich-Struktur bilden.

## Claims

1. Modular device (11) for conversion of electrical energy for implementing the recharging of an electrical battery (58), or user battery, using an AC line supply (61) and supplementary sources of electrical energy (59), said supplementary sources of electrical energy (59) being for example formed by buffer batteries, by flywheel accumulators, by photovoltaic generators or by any other source of electrical energy, **characterized in that** it comprises:
- a plurality of switching modules (122a, 122b, 122c, 13, 14), with a substantially identical structure, each switching module being associated with one of the available sources of electrical energy (61, 59) and producing, by chopping the voltage delivered by the source with which a DC voltage of given value is associated;
- a power DC bus comprising two electrical lines (23, 24), to which each of the various available sources of electrical energy is connected by means of the switching module which is associated with it, each switching module being composed of two electronic switches configured in series between the two lines (23, 24) of the power DC bus,
- a control circuit (22) which generates the chopping controls applied to the switches of the various switching modules (122a, 122b, 122c, 13, 14), the chopping control applied to a given switching module being defined by a control law which depends on the voltage and on the charge current (53) necessary for performing a recharging of the electrical battery in question (58) and on the maximum power (51) available from the AC line supply (61);
- an accommodation structure (31) configured for receiving the various switching modules and forming the power DC bus, said accommodation structure comprising a plurality of functionally identical locations onto which the various switching modules can be placed;
and **in that** the chopping controls generated by the control circuit are square-wave signals having a duty cycle which varies as a function of the value of the voltage (52) to be established on the power DC bus.

2. Device according to Claim 1, **characterized in that**, since the said AC line supply (61) is a three-phase supply, it comprises three switching modules (122a, 122b, 122c) each carrying out the rectification of the AC voltage delivered by one of the phases into a DC voltage; the mid-point of each of the three switching modules being connected to one phase of the AC supply (61) via a transformer (121).

3. Device according to one of Claims 1 to 2, **characterized in that** it comprises a switching module (13) configured for implementing the connection of an electrical energy storage battery (59), of given voltage, to the power DC bus, in such a manner that the storage battery (59) can be charged via the power DC bus or else discharged into the latter.

4. Device according to one of Claims 1 to 3, **characterized in that** it comprises a switching module (14) configured for making the connection of a user battery (58), of a given voltage, to the power DC bus, in such a manner that said user battery (58) can be charged up by the power DC bus with a given voltage and charging current, both characteristic of the battery used.

5. Device according to Claim 4, **characterized in that** the switching module (14) is furthermore configured in such a manner that said user battery (58) can be discharged onto the power DC bus so as to supply a top-up electrical energy over this bus.

6. Device according to any one of the preceding claims, **characterized in that** it comprises an accommodation structure (11) which houses a set of switching modules, with identical structures, mounted onto the accommodation structure (31) so as to form at least three stages for conversion of electrical energy (12, 13 and 14):
- a reversible AC-DC converter stage (12) comprising three switches (122a, 122b, 122c) respectively connected to each of the phases of the AC line supply via an isolation transformer (121),
- a first bidirectional DC-DC conversion stage (13), configured for implementing the recharging of an electrical storage battery (59);
- a second bidirectional DC-DC conversion stage (14), configured for implementing the recharging of the user battery (58) to be recharged;
the first DC-DC conversion stage (13) being furthermore configured in such a manner as to be able to inject current taken from the storage battery (59) onto the power DC bus.

7. Device according to any one of the preceding claims, **characterized in that** the control circuit (22) carries out the regulation (55) of the charging or discharge current of the storage battery (59), the regulation (54) of the charging current of the user battery (58) and also the regulation (56, 57) of the power consumed from the AC line supply (61), this regulation being carried out by measuring the charge currents of the storage battery (59) and of the user battery (58) and also the current consumed from the AC line supply (61) and by applying to each of the AC-DC or DC-DC conversion modules (122, 13, 14) a chopping signal whose duty cycle varies as a function of the current measurement carried out for the module in question.

8. Device according to Claim 6 **characterized in that** the chopping signal applied to each of the modules (122a, 122b, 122c, 13, 14) depends on setpoint values relating to the voltage and to the charging current of the user battery (58), to the value (52) of the voltage of the power DC bus (23, 24) and to the maximum power available (51) from the line supply.

9. Device according to any one of the preceding claims, **characterized in that** the accommodation structure (31) comprises a support (27) onto which the housings enclosing the various switching modules forming the device are mounted, the support (27) forming a heat dissipation element, together with a conductor device forming the power DC bus, which connects in parallel the various switching modules mounted onto the accommodation structure (31), each of the links (23, 24) of the power DC bus being connected to each of the switching modules via a suitable connection means.

10. Device according to Claim 9, **characterized in that**, the switching modules being configured in such a manner that when they are mounted onto the accommodation structure (31) their connection points with the two links (23, 24) forming the power DC bus are aligned in two parallel rows, the power DC bus is composed of two conducting plates (23, 24) separated by an insulator (25), each plate having connection areas arranged so as to be disposed facing points in such a manner as to be able to be connected to the latter by suitable fixing means.

11. Device according to Claim 10, **characterized in that** the power DC bus consists of two layers of conducting material (23, 24) placed on the opposite faces of a plane layer of electrically insulating material (25) forming a sandwich structure.
